# EUROPÄISCHE PATENTSCHRIFT

(11) **EP 3 253 847 B1**
(45) Veröffentlichungstag und Bekanntmachung des Hinweises auf die Patenterteilung: **06.03.2019**
(21) Anmeldenummer: 16702060.1
(22) Anmeldetag: 26.01.2016
(51) Int. Cl.: C09K 5/10

(54) **VERZWEIGTE ORGANOSILOXANE ALS WÄRMETRÄGERFLÜSSIGKEIT**
BRANCHED ORGANOSILOXANES USED AS HEAT TRANSFER FLUID
ORGANOSILOXANES RAMIFIÉS UTILISÉS COMME LIQUIDE CALOPORTEUR

(30) Priorität: 06.02.2015 DE 102015202158
(43) Veröffentlichungstag der Anmeldung: 13.12.2017
(73) Patentinhaber: Wacker Chemie AG, 81737 München (DE)
(72) Erfinder: DÖRRICH, Steffen, 81827 München (DE); WEIDNER, Richard, 84489 Burghausen (DE); HEIDSIECK, Sven, 73431 Aalen (DE); RIEGER, Bernhard, 89275 Elchingen (DE)
(74) Vertreter: Fritz, Helmut
(86) Internationale Anmeldenummer: PCT/EP2016/051529
(87) Internationale Veröffentlichungsnummer: WO 2016/124439

(56) Entgegenhaltungen:
- WO-A1-2010/103103
- US-A- 4 193 885

## Beschreibung

Die vorliegende Erfindung betrifft ein Verfahren zum Betrieb einer Anlage mit einer Wärmeträgerflüssigkeit, die verzweigte Siloxane umfasst.

Organosiloxane und Organopolysiloxane (Siliconöle), im Folgenden zusammenfassend kurz als "Siloxane" bezeichnet, finden auf Grund ihrer hohen thermischen Stabilität, ihres weiten Flüssigkeitsbereiches und der geringen Temperaturabhängigkeit ihrer Viskosität häufige Anwendung als Wärmeträgerflüssigkeiten. In DE 2754705 A1 werden die Vorteile von Siloxanen gegenüber anderen Wärmeträgern dargelegt. Insbesondere im Bereich sehr tiefer (unter -50°C) oder sehr hoher Temperaturen (200-450°C) sind sie organischen Wärmeträgerflüssigkeiten überlegen oder die einzig verwendbare nichtionische Wärmeträgerflüssigkeit überhaupt. Beispielsweise sind in EP 1473346 B1 Mischungen linearer und cyclischer Dimethylpolysiloxane beschrieben, die bis -100°C als Kältemittel verwendbar sind. Weiterhin beschreibt die Broschüre "SYLTHERM 800 Heat Transfer Fluid - Product Technical Data" der Firma The Dow Chemical Company (CH 153-046-E-1097, Oktober 1997) ein lineares, permethyliertes Siliconöl ("Syltherm 800") und gibt als obere Dauergebrauchstemperatur 400°C an (geschlossenes System unter Luftausschluß). Weiterhin ist dort beschrieben, dass eine kurzfristige thermische Belastung bis zu 538°C ohne erhebliche Zersetzung erreichbar ist.

Die genannten Eigenschaften der Siloxane prädestinieren sie für den Einsatz als Hochtemperatur-Wärmeträgerflüssigkeiten, z. B. in Wärmeträgeranlagen, wie solarthermischen Kraftwerken, insbesondere in solchen mit Parabolrinnen- und Fresnel-Technologie, wo die Wärmeträgerflüssigkeit jahrelang einer hohen thermischen Belastung bis 400°C und starken Temperaturschwankungen ausgesetzt ist. Die Verwendung von Siliconölen in solarthermischen Vorrichtungen ist in DE 2754705 A1, US 4122109 und US 4193885 beschrieben.

Die WO 10103103 beschreibt die Verwendung von Polyorganosiloxanen als Wärmeträgerflüssigkeit mit der Maßgabe, dass mindestens ein organischer Rest am Silicium zwei Kohlenstoffatome aufweist. Diese Tatsache ist für die Verwendung der Siloxane sehr nachteilig, da sich das Wärmeträgeröl bei höherer thermischer Belastung durch β-H-Eliminierung zersetzt. In einem höheren Temperaturbereich sind deshalb nur Siloxane ohne Wasserstoffatom in β-Position zum Silicium geeignet.

Die Zusammensetzung von Siloxan-Mischungen ist durch Umlagerungsprozesse (Äquilibrierung) temperaturabhängig und dadurch bis zum Erreichen des Gleichgewichtszustandes bei der gewählten Temperatur auch zeitabhängig. Bei linearen, permethylierten Siliconölen kann das Erreichen des Gleichgewichtszustandes, welcher eine Mischungen aus linearen und cyclischen Siloxanen ist, beispielsweise bei 400°C einige Tage benötigen. Parallel zum oben genannten Prozess ändern sich damit auch die physikalischen Eigenschaften. Das kann dazu führen, dass sich wichtige Betriebsparameter einer mit Siloxanen als Wärmeträgerflüssigkeit betriebenen Vorrichtung, beispielsweise der Dampfdruck oder die Viskosität, mit der Zeit erheblich ändern. Dies ist nachteilig, da es einen zusätzlichen Steuer- und Regelaufwand oder sogar einen Mehraufwand bei der Konstruktion der Vorrichtung erforderlich machen kann oder die Vorrichtung in diesem Zeitraum nur eingeschränkt oder gar nicht nutzbar sein kann. Die entstehenden cylischen Siloxane (u. a. D4) sind aufgrund ihrer Einstufung aus umwelt- und sicherheitstechnischen Aspekten unerwünscht.

Zusätzlich zu den oben beschriebenen Umlagerungsprozessen verändert sich die Struktur linearer Siloxane durch Disproportionierungsreaktionen. Disproportionierung linearer Kettenglieder ((R₂SiO_{2/2}) - bzw. D-Gruppe) führt zur Bildung von (RSiO_{3/2}) - bzw. T- und (R₃SiO_{1/2})- bzw. M-Gruppen. Die gebildeten T-Gruppen sind Verzweigungsstellen in der Siloxanstruktur und diese Verzweigungen bedingen eine Änderung der physikalischen Eigenschaften der Siliconöle wie z. B. eine Erhöhung der Viskosität, was zu einem erhöhten Aufwand an benötigter Pumpleistung führt, um die benötigte Wärmemenge aus der Flüssigkeit zu entnehmen. Dadurch wird der Betrieb der Anlagen erschwert und schließlich unmöglich gemacht.

US 4122109 und US 4193885 beschreiben den Zusatz Metallhaltiger Stabilisatoren sowie optional Wasserstoff-haltiger Silicium-Verbindungen zu nicht-cyclischen Methylpolysiloxanen, um die temperaturabhängige Veränderung der chemischen Zusammensetzung zu unterdrücken und so die Zusammensetzung und die physikalischen Eigenschaften zeitlich stabil zu halten. Aus den Beispielen ist jedoch ersichtlich, dass die Umlagerungen nicht völlig unterdrückt werden können. In der zugehörigen, oben genannten Produktbroschüre ("Syltherm 800") wird angegeben, dass die Umlagerungsprozesse stark verlangsamt doch stattfinden und schließlich nach einigen Monaten der Gleichgewichtszustand erreicht wird. Dies ist mit einem erheblichen Anstieg des Dampfdruckes verbunden. Da Wärmeträgerflüssigkeiten aus Kostengründen in solarthermischen Kraftwerken jedoch jahrelang im Einsatz sind, ist der Stabilisatorzusatz somit für diese Anwendung nicht geeignet, da er die Umlagerungen über diesen Zeitraum hinweg doch nicht verhindern kann, und ist durch die erhöhten Materialkosten sogar nachteilig. Ein Einfluss der Stabilisatoren auf die Disproportionierungreaktionen ist nicht beschrieben.

Die DE 102012211258 beschreibt, dass bestimmte Siloxan-Mischungen (Mischungen aus linearen und cyclischen Siloxanen) bei thermischer Belastung bei einer konstanten Temperatur zeitlich annähernd konstante physikalische Eigenschaften aufweisen können, obwohl sich ihre chemische Zusammensetzung zeitlich bis zum Gleichgewichtszustand hin verändert. Die Zusammensetzung dieser Siloxan-Mischungen muss dabei nicht der Gleichgewichtszusammensetzung bei dieser Temperatur entsprechen. Ein Einsatz solcher Siloxan-Mischungen kann allerdings Disproportionierungreaktionen nicht unterdrücken. Zudem sind cylische Siloxane (u.a. D4) aufgrund ihrer Einstufung aus umwelt- und sicherheitstechnischen Aspekten unerwünscht.

Die RU 2221826 beschreibt die Verwendung von Mischungen linearere Siloxane, insbesondere Decamethyltetrasiloxan, und verzweigten Methylsiloxanen, insbesondere Methyl(trimethyl-siloxy)silan als Wärmeträgermedium für die Anwendung in einem Temperaturbereich von -135°C bis 120°C. In einem so niedrigen Temperaturbereich ist nicht mit einer merklichen Reaktionsgeschwindikeit der Äquilibrierung und der Disproportionierung zu rechnen.

Gegenstand der Erfindung ist ein Verfahren zum Betrieb einer Anlage mit einer Betriebstemperatur von 300°C bis 500°C mit einer Wärmeträgerflüssigkeit, die verzweigte Siloxane der allgemeinen Formel I

(R₃SiO_{1/2})_{w} (SiO_{4/2})_{z}, (I)

in der
- **w**: ganzzahlige Werte von 4 bis 20,
- **z**: ganzzahlige Werte von 1 bis 15,
- **R**: Methylrest bedeuten, umfasst, wobei
die Summe der Anteile aller Siloxane der allgemeinen Formeln I mindestens 95 Massen-%, bezogen auf die gesamte Wärmeträgerflüssigkeit beträgt.

Die Einheiten (R₃SiO_{1/2})_{w} werden als M-Gruppen und (SiO_{4/2})_{z} als Q-Gruppen bezeichnet.

Siloxane unterliegen unter thermischer Belastung Disproportionierungsreaktionen und relativ langsamer reversibler Umlagerungsprozesse, weshalb sich temperatur- und zeitabhängig ein Gleichgewichtszustand verschiedener Siloxane ausbildet. Die resultierende zeitliche Änderung von physikalischen Eigenschaften bei konstanter Temperatur ist für die Anwendung von Siloxanen als Wärmeträger nachteilig. Die Erfindung beruht auf der Entdeckung, dass beide Mechanismen bei linearen, d. h. überwiegend D-Gruppen-haltigen Siloxanen deutlich stärker ausgeprägt sind als bei verzweigten, d. h. Q-Gruppen-haltigen Siloxanen. Die Siloxane der allgemeinen Formel I und deren Mischungen weisen zeitlich annähernd konstante physikalische Eigenschaften auf.

Die Viskosität der Siloxane der allgemeinen Formel I bei 25°C weist bevorzugt Werte unter 100 mPa*s, besonders bevorzugt unter 20 mPa*s, ganz besonders bevorzugt unter 10 mPa*s auf, jeweils gemessen mit dem Viskosimeter µVISK der Firma RheoSense Inc..

Der Dampfdruck der Siloxane der allgemeinen Formel I weist beim Einsatz als Wärmeträgerflüssigkeit bei Betriebstemperatur bevorzugt Werte unter 100 bar, besonders bevorzugt unter 50 bar, ganz besonders bevorzugt unter 35 bar auf.

Die Siloxane der allgemeinen Formel I können herstellungsbedingt als Rest **R** auch OH (Silanol), OR² (Alkoxy; R² = Alkyl), OC(O)R² (Carboxy; R² = Alkyl) und Halogene enthalten. Bevorzugt sind wenige Silanol-, Alkoxy- und Halogen-Reste vorhanden, besonders bevorzugt unter 0,5%. In einer bevorzugten Ausführungsform sind keine Silanol-, Alkoxy- und Halogen-Reste vorhanden.

Vorzugsweise bedeutet **w** ganzzahlige Werte bis 15.
Vorzugsweise bedeutet **z** ganzzahlige 1 bis 5.
Vorzugsweise beträgt **w + z** Werte bis 50, insbesondere bis 20.

Bevorzugt sind Mischungen, bei denen **w** Werte von 4 bis 10, und **z** Werte von 1 bis 4 bedeuten. Besonders bevorzugt sind Mischungen, bei denen **w** Werte von 4 bis 6, **z** Werte von 1 bis 2 und bedeuten. Insbesondere bevorzugt ist das verzweigte Siloxan bei dem **w** = 4 und **z** = 1 ist.

Die Siloxane der allgemeinen Formel I können in einer monomodalen, bimodalen oder multimodalen Molmassenverteilung vorliegen, gleichzeitig kann die Molmassenverteilung eng oder breit sein.

Die Wärmeträgerflüssigkeiten enthalten bevorzugt weniger als 1000 ppm Wasser, besonders bevorzugt weniger als 500 ppm Wasser, ganz besonders bevorzugt weniger als 200 ppm Wasser, jeweils bezogen auf die Masse.

Vorzugsweise verändern sich die physikalischen Eigenschaften im Betrieb, die ausgewählt werden aus Dichte, Dampfdruck, Viskosität, Wärmekapazität und Wärmeleitfähigkeit der Siloxane der allgemeinen Formel I, insbesondere alle diese Eigenschaften bei bestimmungsgemäßer Verwendung um maximal 15%, bevorzugt um maximal 10%, besonders bevorzugt um maximal 5%.

Die Siloxane der allgemeinen Formel I können durch literaturbekannte Synthese-Verfahren oder durch neue, in den Beispielen beschriebene Synthesen hergestellt werden.

Die Gemische der Siloxane der allgemeinen Formel I können außerdem hergestellt werden, indem reine Siloxane der allgemeinen Formeln I oder beliebige Gemische von solchen Siloxanen in jedweder Reihenfolge zubereitet, gemischt und zueinander dosiert werden, gegebenenfalls auch mehrfach wiederholend, gegebenenfalls auch abwechselnd oder gleichzeitig. Durch geeignete Verfahren, beispielsweise Destillation, können Siloxane oder Siloxan-Gemische auch wieder entfernt werden. Die Zusammensetzung der Siloxane der allgemeinen Formel I wird dabei durch die eingesetzten oder entfernten Mengen von Siloxanen der allgemeinen Formeln I gesteuert.
Das Verfahren kann bei Raumtemperatur und Umgebungsdruck durchgeführt werden, aber auch bei erhöhter oder erniedrigter Temperatur sowie erhöhtem oder erniedrigtem Druck.

Siloxane der allgemeinen Formel I und deren Mischungen können weiterhin hergestellt werden, indem geeignete Chlorsilane, Alkoxysilane, Silazane, Carboxysilane oder Gemische der Silane hydrolysiert oder cohydrolysiert und anschließend von Nebenprodukten wie Chlorwasserstoff, Alkoholen, Ammoniak, Ammoniumsalzen oder Carbonsäuren sowie gegebenenfalls von überschüssigem Wasser befreit werden. Optional kann zu der erhaltenen Siloxan-Mischung weiteres Siloxan hinzugefügt oder durch geeignete Verfahren, beispielsweise Destillation, entfernt werden. Das Verfahren kann bei Raumtemperatur und Umgebungsdruck durchgeführt werden, aber auch bei erhöhter oder erniedrigter Temperatur sowie erhöhtem oder erniedrigtem Druck. Die Zusammensetzung der Siloxane der allgemeinen Formel I und deren Mischungen wird dabei durch das Verhältnis der eingesetzten und gegebenenfalls wieder entfernten Mengen von Silanen beziehungsweise Siloxanen gesteuert.

Die Siloxane der allgemeinen Formel I und deren Mischungen können außerdem hergestellt werden, indem reine Siloxane der allgemeinen Formeln I oder beliebige Gemische von solchen Siloxanen äquilibriert und/oder endgestoppert werden, so dass Siloxane und deren Mischungen mit veränderter Zusammensetzung erhalten werden. Diese Zusammensetzung kann der Gleichgewichtszusammensetzung entsprechen, muss dies aber nicht. Das Verfahren kann bei Umgebungsdruck durchgeführt werden, aber auch bei erhöhtem oder erniedrigtem Druck. Die Äquilibrierung kann unkatalysiert oder in Gegenwart eines homogenen oder heterogenen Katalysators, beispielsweise einer Säure oder Base, stattfinden. Der Katalysator kann danach deaktiviert oder aus dem Siloxan und dessen Mischung entfernt werden, beispielsweise durch Destillation oder Filtration, muss dies aber nicht. Zur Vermeidung von Silanol-Gruppen in den Siloxanen können diese endgestoppert werden. Die Endstopperung kann durch Einsatz von homogenen oder heterogenen Katalysatoren, beispielweise einer Säure/Lewis-Säure, durch Reaktion mit Me₃Si-X (X = Cl, OH, OM (M = Metall), H, OSiMe₃, NHSiMe₃), Me-Y (Y = Halogen, OC(O)OMe, OS(O)₂OMe, M (M = Metall), OH), CH₂=N₂ oder Kombination der Reagenzien durchgeführt werden. Die Endstopperung mit Reagenzien kann unkatalysiert oder in Gegenwart eines homogenen oder heterogenen Katalysators, beispielsweise einer Säure/Lewis-Säure, stattfinden. Der Katalysator kann danach deaktiviert oder aus dem Siloxan und dessen Mischung entfernt werden, beispielsweise durch Destillation oder Filtration, muss dies aber nicht.
Durch geeignete Verfahren, beispielsweise Destillation, können auch Siloxane oder Siloxan-Gemische wieder entfernt werden. Die Zusammensetzung der Siloxane der allgemeinen Formel I wird dabei durch das Verhältnis der eingesetzten und gegebenenfalls wieder entfernten Mengen von Siloxanen der allgemeinen Formeln I, die Temperatur sowie Art (offenes oder geschlossenes System) und Dauer der Äquilibrierung und/oder Endstopperung gesteuert.

Die vorstehend beschriebenen Verfahren können auch kombiniert werden. Sie können optional in Gegenwart eines oder mehrerer Lösungsmittel durchgeführt werden. Bevorzugt wird kein Lösungsmittel verwendet. Die eingesetzten Silane, Silan-Gemische, Siloxane und Siloxan-Gemische sind entweder Standard-Produkte der Silicon-Industrie oder können durch literaturbekannte Synthese-Verfahren hergestellt werden. Weitere Synthese-Verfahren sind bei den Beispielen beschrieben.

Die Wärmeträgerflüssigkeit kann neben Siloxanen der allgemeinen Formel I gelöste oder suspendierte oder emulgierte Zusatzstoffe enthalten, um ihre Stabilität zu erhöhen oder ihre physikalischen Eigenschaften zu beeinflussen. Gelöste MetallVerbindungen, beispielsweise Eisen-Carboxylate, können als Radikalfänger und Oxidationsinhibitoren die Haltbarkeit eines Wärmeträgers erhöhen. Suspendierte Zusatzstoffe (Fachbegriff Nanofluid), beispielsweise Kohlenstoff oder Eisenoxid, können physikalische Eigenschaften eines Wärmeträgers, beispielsweise die Wärmekapazität oder die Wärmeleitfähigkeit, verbessern.

Vorzugsweise beträgt die Summe der Anteile aller Siloxane der allgemeinen Formel I mindestens 95 Massen-%, besonders mindestens 98 Massen-%, insbesondere mindestens 99,5 Massen-%, bezogen auf die gesamte Wärmeträgerflüssigkeit.

Die Wärmeträgerflüssigkeiten werden bevorzugt als Hochtemperatur-Wärmeträger in solarthermischen Vorrichtungen, insbesondere in Parabolrinnen- und Fresnel-Kraftwerken eingesetzt. Sie können weiterhin als Wärmeträgerflüssigkeiten in der chemischen Industrie sowie der Metall-, Pharmazeutischen- und Lebensmittelindustrie, als Wärmeträgerflüssigkeiten für tiefe Temperaturen und als Arbeitsfluide in Wärmekraftmaschinen, insbesondere aber nicht ausschließlich solarthermischen, verwendet werden. Insbesondere werden die Wärmeträgerflüssigkeiten in CSP (Concentrated Solar Power) Kraftwerken eingesetzt. Die Wärmeträgerflüssigkeiten werden bevorzugt verwendet bei Temperaturen bis 490°C, insbesondere 350°C bis 475°C, insbesondere bevorzugt 400°C bis 450°C. Bei Temperaturen oberhalb 200°C ist der Einsatz unter einer Schutzgasatmosphäre bevorzugt, um eine oxidative Zersetzung zu verhindern. Als Schutzgas bevorzugt sind Edelgase, wie Helium, Argon und Neon, sowie Stickstoff.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele:

### Allgemeine Arbeitstechniken, Lösungsmittel und Chemikalien

Alle Synthesen wurden unter Schlenk-Bedingungen durchgeführt. Als Schutzgas wurde Argon (99,998%, Westfalen AG) verwendet. Die verwendeten Chlorsilane wurden von der Wacker Chemie AG oder von Sigma-Aldrich bezogen, vor Verwendung unter reduziertem Druck fraktionierend destilliert und unter Schutzgas gelagert. Die verwendeten Lösungsmittel wurden nach gängigen Verfahren getrocknet, über aktiviertem Molekularsieb (3 Å, VWR) und unter Argon gelagert. Als Trocknungsmittel wurden für THF (Tetrahydrofuran) Natrium/Diphenylmethanon und für Methanol Natrium verwendet. Alle übrigen Reagenzien und Lösungsmittel wurden von ABCR, Sigma-Aldrich, Fluka oder VWR erworben und falls nicht anders angegeben ohne weitere Reinigung verwendet. Das verwendete Wasser war vollständig entsalzt. Zur Dosierung wurde die Spritzenpumpe KDS-200-CE der Firma KD Scientific verwendet. Für die Durchführung der Temperungen wurden entweder 100 mg des Siloxans in einer 1,5 ml Ampulle aus Borosilikatglas mit Sollbruchstelle (Firma Wheaton) unter Vakuum eingeschmolzen, oder 1,5 g des Siloxans wurden in eine druckfeste 14 ml Stahlflasche eingefüllt. Das Befüllen der Stahlflaschen erfolgte in einer geeignet ausgestatteten Glovebox (Argon) der Firma MBraun in welche alle Komponenten über ein übliches Schleusensystem ein- und ausgeführt werden konnten. Verschlossen wurde die Flaschen mit einem Schraubdeckel. Als zusätzliche Abdichthilfe der Schraubgewinde wurde eine Dichtpaste verwendet (WS 600, Fa. WEKEM). Das endgültige Festziehen des Deckels erfolgte nach Ausschleusen der Flaschen aus der Glovebox mittels eines Schraubschlüssels. Die thermische Belastung der Siloxane erfolgte durch Lagerung der befüllten Glasampullen oder Stahlflaschen in Carbolite LHT Öfen der Firma Carbolite GmbH bei unterschiedlich hohen Temperaturen, um die Effekte des erfindungsgemäßen Verfahrens zu zeigen.

Die entnommenen Proben wurden mittels NMR-Spektroskopie, Gaschromatographie oder dynamischer Viskosimetrie analysiert. Vergleichende Analysen von NMR- (Mol-%) und GC-Messungen (GC-Flächen-%) zeigen sehr gute Übereinstimmungen, weshalb alle Angaben im experimentellen Abschnitt in % angegeben sind.

### Analytik

Die Kernresonanzspektren wurden an einem Bruker Avance I 360 (¹H: 360.1 MHz, ²⁹Si: 71.6 MHz) Spektrometer oder einem Bruker Avance III HD 500 (²⁹Si: 99.4 MHz) Spektrometer mit BBO 500 MHz S2 Probenkopf aufgenommen. Die Chemischen Verschiebungen sind in δ-Werten (ppm) relativ zum Restprotonensignal des verwendeten deuterierten Lösungsmittels (Euriso-top) angegeben (CDCl₃, *δ* = 7.26 ppm; CD₂Cl₂, δ = 7.24 ppm). Als interne Referenz für die ²⁹Si-Spektren diente Tetramethylsilan (²⁹Si: *δ* = 0.00 ppm). Die Multiplizität der Signale wurde folgendermaßen abgekürzt: s (Singulett), t (Triplett) und q (Quartett). Die Aufnahme der ²⁹Si-Spektren erfolgte für die monomeren Syntheseprodukte mit der INEPT-Pulssequenz und für die oligomeren Syntheseprodukte mit der inverse gated-Pulssequenz (NS = 3000; 150 mg Siloxan in 500 µl einer 4×10⁻² molaren Lösung von Cr(acac)₃ in CD₂Cl₂). Der Glasbuckel wurde mit Hilfe des Software-Pakets cryoprogld der Firma Bruker aus dem Spektrum entfernt). Die GC/MS-Analytik wurden an einem Varian GC-3900 Gaschromatographen (Säule: VF-5ms, 30 m × 0.25 mm × 0.25 µm, Trägergas: Helium, Flussrate: 1 ml/min, Injektor: CP-1177, Spilt: 1:50) durchgeführt, welches mit einem Massenspektrometer Varian MS Saturn 2100 T (EI, 70 eV) gekoppelt ist. Die GC-Analytik wurden mit einem Varian GC-3900 Gaschromatographen (Säule: VF-200ms, 30 m × 0.32 mm × 0.25 µm, Trägergas Helium, Flussrate: 1 ml/min, Injektor: CP-1177, Split: 1:50, Detektor: FID 39Xl, 250°C) durchgeführt. Elementaranalysen wurden unter Verwendung eines Vario EL Analysators der Firma Elementar durchgeführt. Die Viskosität wurde mit dem Viskosimeter µVISK der Firma RheoSense Inc. bei einer Temperatur von 25°C bestimmt. Für die Kugelrohdestillationen wurde ein Kugelrohrofen B-580 der Firma Büchi verwendet. Die Angegebenen Temperaturen entsprechen der Innentemperatur des Ofens.

### Messung des Gehalts an D- und T-Gruppen (²⁹Si-NMR)

Die Bestimmung des Anteils an Disproportionierung (Gehalt an D- bzw. T-Gruppen) wurde mittels Kernresonanzspektroskopie (²⁹Si-NMR; Bruker Avance III HD 500 (²⁹Si: 99.4 MHz) Spektrometer mit BBO 500 MHz S2 Probenkopf; inverse gated-Pulssequenz (NS = 3000); 150 mg Siloxan in 500 µl einer 4×10⁻² molaren Lösung von Cr(acac)₃ in CD₂Cl₂. Der Glasbuckel wurde mit Hilfe des Software-Pakets cryoprogld der Firma Bruker aus dem Spektrum entfernt) bestimmt. Das Integral der D- und T-Werte wurde dazu mit der Gesamtsumme der Integralwerte für S- (freie Silane (z. B. Me₄Si bzw. ins Polymer eingebaute Gruppen C₄Si), M-Gruppen (Kettenenden Me₃Si0_{1/2}- bzw. C₃SiO_{1/2}), D-Gruppen (Kettenglieder -Me₂Si0_{2/2}- bzw. C₂Si0_{2/2}), T-Gruppen (Verzweigungspunkte MeSi0_{3/2}) und Q-Gruppen (Vernetzungspunkte Si0_{4/2}) in Beziehung gesetzt (% D bzw. % T). Im Zuge der Disproportionierung entstehen aus 2M → S + D und aus 2D → M + T. Ausgehend von DM-Systemen wurde deshalb der Anteil an T-Einheiten und ausgehend von TM- und QM-Systemen der Anteil an D-Einheiten als Grad der Disproportionierung gewertet.

### Synthesen

### Methyltris(trimethylsiloxy)silan (TM₃) (nicht erfindungsgemäß)

Methyltris(trimethylsiloxy)silan (TM₃) wurde gemäß EP1481979 dargestellt. Sdp.: 145°C, 20 mbar; ¹H-NMR (360.1 MHz, CDCl₃): δ [ppm] = 0.12 (s, 27 H, (C*H*₃)₃SiO_{1/2}), 0.01 (s, 3 H, C*H*₃SiO_{3/2}); ²⁹Si-NMR (71.6 MHz, CDCl₃) : δ [ppm] = 7.6 (s, (CH₃)₃*Si*O_{1/2}), - 64.0 (s, CH₃*Si*O_{3/2}); MS: *m*/*z* (%) = 295.0 (100) [M⁺ -CH₃]; Elementaranalyse: Berechnet (%) für C₁₀H₃₀O₃Si₄ : C 38.66, H 9.73; Gefunden: C 38.42, H 9.86; Viskosität: 1.39 mPa*s (25°C).

### MT-Siloxan T₁M_{1.2} (nicht erfindungsgemäß)

In einem mit Argon inertisierten 1 l 2-Halsschlenkkolben mit Septum und Gasauslass werden 50.0 g (335 mmol) Trichlormethylsilan und 116 g (1.07 mol) Chlortrimethylsilan in 400 ml Acetonitril gelöst. Mit einer Spritzenpumpe werden 56.0 g (3.11 mol) Wasser mit einer Zulaufgeschwindigkeit von 0.20 ml/min bei 20°C unter starkem Rühren zugegeben. Nach vollständiger Zugabe wird die Reaktionslösung bei 20°C für 2 h gerührt, mit 168 ml Wasser versetzt und mit Methyltertbutylether extrahiert (3 × 200 ml). Die vereinigten organischen Phasen werden mit 150 ml gesättigter wässriger Natriumhydrogencarbonatlösung, mit Wasser (3 × 200 ml) und mit 50 ml gesättigter Kochsalzlösung neutral gewaschen, über Natriumsulfat (∼40 g) getrocknet und filtriert. Das Lösungsmittel wird unter vermindertem Druck entfernt und der erhaltenen Rückstand wird mit 5.00 g (31.0 mmol) Hexamethyldisilazan versetzt und für 12 h bei 20°C gerührt. Anschließend werden die flüchtigen Verbindungen unter reduziertem Druck (3·10⁻² mbar, 25°C) entfernt um 54.0 g des Produkts als farbloses Öl zu erhalten. ²⁹Si-NMR (99.4 MHz, CD₂Cl₂): M- zu T-Verhältnis 1.2:1; Viskosität: 6.73 mPa*s (25°C).

### Tetrakis(trimethylsilyloxy)silan (QM₄)

In einem mit Argon inertisierten 2 l 4-Halsrundkolben mit Rückflusskühler, Thermometer und Rührer werden 649 g (4.02 mol) Hexamethyldisiloxan und 64.0 g (2.00 mol) Methanol vorgelegt und mit einem Eisbad auf unter 10°C gekühlt. Innerhalb von 15 min werden 9.80 g (100 mmol H₂SO₄) konzentrierte Schwefelsäure zugegeben und für 30 min bei 10°C gerührt. Anschließend werden 152 g (999 mmol) Tetramethylorthosilikat innerhalb von 30 min zugegeben und die Reaktionslösung für 1 h bei 10°C gerührt. Nach Zugabe von 105 g (5.83 mol) Wasser wird die Reaktionslösung zunächst 3 h bei Raumtemperatur und anschließend für 3 h unter Rückfluss gerührt. Die Reaktionslösung wird mit 500 ml 1 M wässriger Natriumhydrogencarbonatlösung versetzt, für 10 min bei 20°C gerührt und die wässrige Phase abgetrennt. Die organische Phase wird mit Wasser (3 × 200 ml) neutral gewaschen. Anschließend wird die organische Phase unter reduziertem Druck vom Lösungsmittel befreit und der Rückstand unter Vakuum fraktionierend destilliert, um 201 g (522 mmol, 52.3% Ausbeute) Produkt als farbloses Öl zu erhalten. Sdp.: 180°C, 42.0 mbar; ¹H-NMR (360.1 MHz, CDCl₃): δ [ppm] = 0.10 (s, 36 H, (C*H*₃)₃SiO_{1/2}) ; ²⁹Si-NMR (71.6 MHz, CDCl₃) : δ [ppm] = 8.5 (s, (CH₃)₃*Si*O_{1/2}), -104.7 (s, *Si*O_{4/2}) ; MS: *m*/*z* (%) = 369.2 (100) [M⁺ -CH₃]; Elementaranalyse: Berechnet (%) für C₁₂H₃₆O₄Si₅ : C 37.45, H 9.43; Gefunden: C 37.26, H 9.56; Viskosität: 2.71 mPa*s (25°C).

### Hexakis(trimethylsiloxy)disiloxan (Q₂M₆)

### Stufe 1: Synthese von Hexaethoxydisiloxan

In einem mit Argon inertisierten 500 ml 2-Halsschlenkkolben mit Septum und Rückflusskühler werden 62.5 g (300 mmol) Tetraethylorthosilicat, 1.35 ml (74.9 mmol) Wasser und 1.25 ml 6 N Salzsäure in 200 ml Tetrahydrofuran gelöst und für 3 h unter Rückfluss erhitzt. Das Lösungsmittel wird unter reduziertem Druck entfernt und der erhaltene Rückstand wird unter vermindertem Druck fraktionierend destilliert, um 3.80 g (11.1 mmol, 7.33% Ausbeute) des Produkts als farbloses Öl zu erhalten. Sdp.: 125°C, 10.0 mbar; ¹H-NMR (360.1 MHz, CDCl₃): δ [ppm] = 3.88 (q, ³J(H,H) = 7.0 Hz, 12 H, OC*H*₂CH₃), 1.25 (t, ³J(H,H) = 7.0 Hz, 18 H, OCH₂C*H*₃); ²⁹Si-NMR (71.6 MHz, CDCl₃) : δ [ppm] = -88.6 (s, (OEt)₃*Si*O_{1/2}); MS: m/z (%) = 297.1 (100) [M⁺ -OCH₂CH₃]; Elementaranalyse: Berechnet (%) für C₁₂H₃₀O₇Si₂: C 42.1, H 8.83; Gefunden: C 35.5, H 9.03.

### Stufe 2: Synthese von Hexakis(trimethylsiloxy)disiloxan (Q₂M₆)

In einem 25 ml Rundkolben mit Rückflusskühler werden 1.71 g (4.99 mmol) Hexaethoxydisiloxan und 4.16 g (31.5 mmol) Trimethylsilylacetat vorgelegt und mit 710 µl konzentrierter Salzsäure versetzt. Die erhaltene Reaktionslösung erwärmt sich auf ca. 50°C. Nachdem die Reaktionslösung auf 20°C abgekühlt ist, wird sie mit 50.0 ml Diethylether versetzt, mit gesättigter Natriumhydrogencarbonatlösung (2 x 50.0 ml) und Wasser (50.0 ml) gewaschen, über Natriumsulfat (∼5 g) getrocknet und filtriert. Das Lösungsmittel wird unter reduziertem Druck entfernt und der erhaltene Rückstand wird mit 15.0 ml Methanol versetzt. Der entstandene Niederschlag wird abfiltriert, mit kaltem Methanol gewaschen und zur Reinigung sublimiert (60°C, 0.02 mbar), um 670 mg (1.10 mmol, 22.0% Ausbeute) des Produkts als farblosen Feststoff zu erhalten. ¹H-NMR (360.1 MHz, CDCl₃): δ [ppm] = 0.12 (s, 54H, (C*H*₃)₃SiO_{1/2}); ²⁹Si-NMR (71.6 MHz, CDCl₃): δ [ppm] = 8.8 (s, (CH₃)₃*Si*O_{1/2}), -106,8 (s, *Si*O_{4/2}); MS: *m*/*z* (%) = 591.2 (100) [M⁺ -CH₃]; Elementaranalyse: Berechnet (%) für C₁₈H₅₄O₇Si₈: C 35.6, H 8.96; Gefunden: C 35.55, H 9.07.

### MQ-Siliconöl Q₁M_{3.7}

In einem 1 l 3-Halskolben mit Rückflusskühler und Tropftrichter werden 20.0 g (118 mmol) Tetrachlorsilan in 200 ml Tetrahydrofuran gelöst. Eine Lösung von 63.7 g (706 mol) Trimethylsilanol in 200 ml Tetrahydrofuran wird innerhalb von 2 h zugegeben. Die erhalten Reaktionslösung wird für 3 h unter Rückfluss und für 17 h bei 20°C gerührt. 500 ml einer 1 M wässrigen Natriumhydrogencarbonatlösung und 500 ml Diethylether werden zugegeben, die resultierenden Phasen getrennt und die wässrige Phase wird mit Diethylether extrahiert (3 × 50.0 ml).

Die vereinigten organischen Phasen werden mit Wasser neutral gewaschen, über Natriumsulfat (∼40 g) getrocknet und filtriert. Das Lösungsmittel, überschüssiges Trimethylsilanol und Hexamethyldisiloxan werden unter vermindertem Druck entfernt und der erhaltenen Rückstand wird mit 5.00 g (31.0 mmol) Hexamethyldisilazan versetzt und für 12 h bei 20°C gerührt. Anschließend werden die flüchtigen Verbindungen unter reduziertem Druck (3·10⁻² mbar, 25°C) entfernt um 27.0 g des Produkts als farbloses Öl zu erhalten. ²⁹Si-NMR (99.4 MHz, CD₂Cl₂) : M- zu Q-Verhältnis 3.7:1; Viskosität: 5.97 mPa*s (25°C).

### Temperung: Siloxane und Siloxan-Mischungen mit geringer Umlagerung (Äquilibrierung)

### Beispiel 1 Temperung WACKER AK 5 (D₄M₁) (nicht erfindungsgemäß)

1,5 g des MD-Siloxans WACKER AK 5 (Viskosität: 5.33 mPa*s bei 25°C) wird 7 Tage in einer Stahlampulle getempert.
Leichtsieder (M₂, MDM, D₃, D₄) vor Temperung (²⁹Si-NMR): 0%
Leichtsieder (M₂, MDM, D₃, D₄) nach Temperung bei 400°C (²⁹Si-NMR): 13,4%
Leichtsieder (M₂, MDM, D₃, D₄) nach Temperung bei 425°C (²⁹Si-NMR): 13,4%

### Beispiel 2 Temperung TM₃ (nicht erfindungsgemäß)

1,5 g des MT-Siloxans TM₃ (Viskosität: 1.39 mPa*s bei 25°C) wird 7 Tage in einer Stahlampulle getempert.
Leichtsieder (M₂) vor Temperung (²⁹Si-NMR): 0%
Leichtsieder (M₂) nach Temperung bei 400°C (²⁹Si-NMR): 4,7%
Leichtsieder (M₂) nach Temperung bei 425°C (²⁹Si-NMR): 4,9%

### Beispiel 3 Temperung T₁M_{1.2} (nicht erfindungsgemäß)

1,5 g des MT-Siloxans T₁M_{1.2} (Viskosität: 6.73 mPa*s bei 25°C) wird 7 Tage in einer Stahlampulle getempert.
Leichtsieder (M₂) vor Temperung (²⁹Si-NMR): 0%
Leichtsieder (M₂) nach Temperung bei 400°C (²⁹Si-NMR): 7,1%
Leichtsieder (M₂) nach Temperung bei 425°C (²⁹Si-NMR): 9,0%

### Beispiel 4 Temperung QM₄

1,5 g des MQ-Siloxans QM₄ (Viskosität: 2.71 mPa*s bei 25°C) wird 7 Tage in einer Stahlampulle getempert.
Leichtsieder (M₂) vor Temperung (²⁹Si-NMR): 0%
Leichtsieder (M₂) nach Temperung bei 400°C (²⁹Si-NMR): 0,1%
Leichtsieder (M₂) nach Temperung bei 425°C (²⁹Si-NMR): 0,3%

### Beispiel 5 Temperung Q₂M₆

100 mg des MQ-Siloxans Q₂M₆ wird 7 Tage in einer Glasampulle getempert.
Leichtsieder (M₂) vor Temperung (GC): 0%
Leichtsieder (M₂) nach Temperung bei 400°C (GC): 0,1%
Leichtsieder (M₂) nach Temperung bei 425°C (GC): 0,2%

### Beispiel 6 Temperung Q₁M_{3.7}

1,5 g des MQ-Siloxans Q₁M_{3.7} (Viskosität: 5.97 mPa*sbei 25°C) wird 7 Tage in einer Stahlampulle getempert.
Leichtsieder (M₂) vor Temperung (²⁹Si-NMR): 0%
Leichtsieder (M₂) nach Temperung bei 400°C (²⁹Si-NMR): 0,3%
Leichtsieder (M₂) nach Temperung bei 425°C (²⁹Si-NMR): 0,4%

Ein Vergleich der Beispiele 1 bis 6 demonstriert die vorliegende Erfindung (Tabelle 1): TM-Siloxane (Beispiele 2 und 3) zeigen, dass die Umlagerung im Vergleich zu MD-Siloxanen (Beispiel 1) weniger stark ausgeprägt ist und sich dadurch wesentlich weniger Leichtsieder, welche zu einem großen Teil für die Dampfdruckerhöhung und die Viskositätserniedrigung verantwortlich sind, bilden. Bei QM-Siloxanen (Beispiele 4 bis 6) ist die Umlagerung fast vollständig unterdrückt und es bilden sich folglich fast keine Leichtsieder.

**Tabelle 1 Vergleich der Temperungsexperimente**

| Siloxan | Leichtsieder nach 7d bei 400°C [%] | Leichtsieder nach 7d bei 425°C [%] |
|---|---|---|
| D₄M₁ (WACKER AK 5)* | 13,4 | 13,4 |
| TM₃* | 4,7 | 4,9 |
| T₁M_{1.2}* | 7,1 | 9,0 |
| QM₄ | 0,1 | 0,3 |
| Q₂M₆ | 0,1 | 0,2 |
| Q₁M_{3.7} | 0,3 | 0,4 |

| | | |
|---|---|---|
| * nicht erfindungsgemäß | | |

Es zeigt sich, dass die Umlagerung durch Vermeidung von D-Einheiten und Verwendung von T-Einheiten vermindert und durch Vermeidung von D- und T-Einheiten und Verwendung von Q-Einheiten fast vollständig unterdrückt werden kann. Das hat zu Folge, dass sich die physikalischen Eigenschaften des Wärmeträgeröls, beispielweise die Viskosität - ersichtlich anhand Tabelle 2 - oder der Dampfdruck nicht bzw. weniger stark verändern.

**Tabelle 2 Vergleich der Temperungsexperimente**

| Siloxan | Viskosität [mPa*s] | Viskosität nach 7d bei 400°C absolut [mPa*s] und die relative Änderung zur Ausgangsviskosität [%] (in Klammern) | Viskosität nach 7d bei 425°C absolut [mPa*s] und die relative Änderung zur Ausgangsviskosität [%] (in Klammern) |
|---|---|---|---|
| D₄M₁ (WACKER AK 5)* | 5,33 | 3,15 (40,9) | 3,15 (40,9) |
| QM₄ | 2,71 | 2,71 (0) | 2,69 (0,7) |
| Q₁M_{3.7} | 5,97 | 6,01 (0,7) | 6,05 (1,3) |

| | | | |
|---|---|---|---|
| * nicht erfindungsgemäß | | | |

Dadurch entfällt bei Betrieb einer Wärmeträgeranlage der zusätzliche Steuer- und Regelaufwand oder sogar ein Mehraufwand bei der Konstruktion der Vorrichtung oder dass die Vorrichtung in diesem Zeitraum nur eingeschränkt oder gar nicht nutzbar ist. Ein weiterer Vorteil der QM-Siloxane ist, dass im Vergleich zu DM-Siloxanen wie dem WACKER AK 5 keine cylischen D-Siloxane (u. a. D4) entstehend, was insbesondere im Hinblick auf umwelt- und sicherheitstechnische Aspekte von großem Vorteil ist.

### Temperung: Siloxane und Siloxan-Mischungen mit geringer Disproportionierung

### Beispiel 7 Temperung WACKER AK 5 (nicht erfindungsgemäß)

1,5 g des MD-Siloxans WACKER AK 5 (Viskosität: 5.33 mPa*s bei 25°C) wird 42 Tage bei 450°C in einer Stahlampulle getempert. Anteil Disproportionierungsprodukt (T-Gruppen) vor Temperung (²⁹Si-NMR): 0%
Anteil Disproportionierungsprodukt (T-Gruppen) nach Temperung (²⁹Si-NMR): 4,9% und 1,2% bei Normierung auf das D-Ausgangsverhältnis (Startverhältnis D/M = 4/1).

### Beispiel 8 Temperung QM₄

1,5 g des MQ-Siloxans QM₄ (Viskosität: 2.71 mPa*s bei 25°C) wird 42 Tage bei 450°C in einer Stahlampulle getempert. Anteil Disproportionierungsprodukt (D-Gruppen) vor Temperung (²⁹Si-NMR): 0%
Anteil Disproportionierungsprodukt (D-Gruppen) nach Temperung (²⁹Si-NMR): 1,9% und 0,5% bei Normierung auf das M-Ausgangsverhältnis (Startverhältnis M/Q = 4/1).

### Beispiel 9 Temperung Q₁M_{3.7}

1,5 g des MQ-Siloxans Q₁M_{3.7} (Viskosität: 5.97 mPa*s bei 25°C) wird 42 Tage bei 450°C in einer Stahlampulle getempert. Anteil Disproportionierungsprodukt (D-Gruppen) vor Temperung (²⁹Si-NMR): 0%
Anteil Disproportionierungsprodukt (D-Gruppen) nach Temperung (²⁹Si-NMR): 2,2% und 0,6% bei Normierung auf das M-Ausgangsverhältnis (Startverhältnis M/Q = 3,7/1).

Ein Vergleich der Beispiele 7 bis 9 demonstriert die vorliegende Erfindung (Tabelle 3): QM-Siloxane (Beispiele 8 und 9) zeigen, dass die Disproportionierung im Vergleich zu MD-Siloxanen (Beispiel 7) weniger stark ausgeprägt ist und sich dadurch die Anzahl der Kettenenden (M), der linearen Kettengliedern (D), der Verzweigungspunkte (T) und der Vernetzungspunkte (Q) weniger stark verändern, was zur Folge hat, dass sich die physikalischen Eigenschaften des Wärmeträgeröls, beispielsweise der Dampfdruck oder die Viskosität zu einem wesentlich geringeren Anteil verändern. Dadurch entfällt bei Betrieb einer Wärmeträgeranlage der zusätzliche Steuer- und Regelaufwand oder sogar ein Mehraufwand bei der Konstruktion der Vorrichtung oder dass die Vorrichtung in diesem Zeitraum nur eingeschränkt oder gar nicht nutzbar ist. Durch Verringerung der Disproportionierung erhöht sich die Standzeit und erniedrigt sich die Austauschrate des Wärmeträgeröls wodurch der Betrieb von Wärmeübertragungsanlagen wesentlich wirtschaftlicher wird. Durch die geringere Disproportionierungsrate kann das Wärmeträgeröl auch bei höheren Betriebstemperaturen verwendet werden als MD-Siloxane, wodurch beispielweise in solarthermischen Anlagen höhere Wirkungsgrade bei der Wärmeübertragung erreicht werden. Dies führt zu einer deutliche Effizienzsteigerung und einem wirtschaftlicheren Betrieb von Wärmekraftmaschinen.

**Tabelle 3 Vergleich der Temperungsexperimente**

| Siloxan | Anteil des Disproportionierungsprodukts nach 42d bei 450°C [%] | Auf das Ausgangsverhältnis normierter Anteil des Disproportionierungsprodukts nach 42d bei 450°C [%] |
|---|---|---|
| D₄M₁ (WACKER AK 5)* | 4,9 | 1,2 |
| QM₄ | 1,9 | 0,5 |
| Q₁M_{3.7} | 2,2 | 0,6 |

| | | |
|---|---|---|
| * nicht erfindungsgemäß | | |

## Patentansprüche

1. Verfahren zum Betrieb einer Anlage mit einer Betriebstemperatur von 300°C bis 500°C mit einer Wärmeträgerflüssigkeit, die verzweigte Siloxane der allgemeinen Formel I
(R₃SiO_{1/2})_{w} (SiO_{4/2})_{z}, (I)
in der
**w** ganzzahlige Werte von 4 bis 20,
**z** ganzzahlige Werte von 1 bis 15,
**R** Methylrest bedeuten, umfasst, wobei
die Summe der Anteile aller Siloxane der allgemeinen Formeln I mindestens 95 Massen-%, bezogen auf die gesamte Wärmeträgerflüssigkeit beträgt.

2. Verfahren nach Anspruch 1, bei dem **w** Werte von 4 bis 10 und **z** Werte von 1 bis 4 bedeuten.

3. Verfahren nach einem oder mehreren der vorangehenden Ansprüche, bei dem **w** = 4 und **z** = 1 sind.

4. Verfahren nach einem oder mehreren der vorangehenden Ansprüche, bei dem die Wärmeträgerflüssigkeit neben Siloxanen der allgemeinen Formel I gelöste oder suspendierte oder emulgierte Zusatzstoffe enthält.

5. Verfahren nach einem oder mehreren der vorangehenden Ansprüche, bei dem die Summe der Anteile aller Siloxane der allgemeinen Formeln I mindestens 99,5 Massen-% bezogen auf die gesamte Wärmeträgerflüssigkeit beträgt.

6. Verfahren nach einem oder mehreren der vorangehenden Ansprüche, bei dem die Anlage eine solarthermische Vorrichtung ist.

7. Verfahren nach Anspruch 6, bei dem die Anlage eine CSP (Concentrated Solar Power) Kraftwerk ist.

## Claims

1. Method of operating a system at an operating temperature of 300°C to 500°C using a heat transfer fluid comprising branched siloxanes of general formula I
(R₃SiO_{1/2})_{w} (SiO_{4/2})_{z}, (I)
where
**w** represents integer values from 4 to 20,
**z** represents integer values from 1 to 15,
**R** represents methyl, wherein
the sum total of the proportions of all siloxanes of general formulae I is not less than 95% by mass, based on the heat transfer fluid as a whole.

2. Method according to Claim 1 wherein **w** represents values from 4 to 10 and **z** represents values from 1 to 4.

3. Method according to either or both of the preceding claims wherein **w** represents 4 and **z** represents 1.

4. Method according to one or more of the preceding claims wherein the heat transfer fluid contains dissolved or suspended or emulsified nanofluids as well as siloxanes of general formula I.

5. Method according to one or more of the preceding claims wherein the sum total of the proportions of all siloxanes of general formulae I is not less than 99.5% by mass, based on the heat transfer fluid as a whole.

6. Method according to one or more of the preceding claims wherein the system is a solar thermal device.

7. Method according to Claim 6 wherein the system is a concentrated solar power (CSP) power plant.

## Revendications

1. Procédé d'exploitation d'une unité à une température d'exploitation de 300 °C à 500 °C avec un liquide caloporteur qui comprend des siloxanes ramifiés de formule générale I
(R₃SOi_{1/2})_{w} (SiO_{4/2})_{z} (I)
dans laquelle
**w** signifie des valeurs de nombres entiers de 4 à 20,
**z** signifie des valeurs de nombres entiers de 1 à 15,
**R** signifie un radical méthyle,
la somme des proportions de tous les siloxanes de formule générale I étant d'au moins 95 % en masse, par rapport à l'ensemble du liquide caloporteur.

2. Procédé selon la revendication 1, dans lequel **w** signifie des valeurs de 4 à 10 et **z** signifie des valeurs de 1 à 4.

3. Procédé selon une ou plusieurs des revendications précédentes, dans lequel **w** = 4 et **z** = 1.

4. Procédé selon une ou plusieurs des revendications précédentes, dans lequel le liquide caloporteur contient, en plus des siloxanes de formule générale I, des additifs dissous ou suspendus ou émulsifiés.

5. Procédé selon une ou plusieurs des revendications précédentes, dans lequel la somme des proportions de tous les siloxanes de formule générale I est d'au moins 99,5 % en masse, par rapport à l'ensemble du liquide caloporteur.

6. Procédé selon une ou plusieurs des revendications précédentes, dans lequel l'unité est un dispositif thermique solaire.

7. Procédé selon la revendication 6, dans lequel l'unité est une centrale CSP (Concentrated Solar Power).
